# EUROPEAN PATENT SPECIFICATION

(11) **EP 1 852 799 B1**
(45) Date of publication and mention of the grant of the patent: **24.08.2016**
(21) Application number: 07107470.2
(22) Date of filing: 03.05.2007
(51) Int. Cl.: G06F 21/10, H04L 9/14, H04L 9/08

(54) **Device-independent management of cryptographic information**
Geräteunabhängige Verwaltung kryptographischer Informationen
Gestion indépendante d'un dispositif pour des informations cryptographiques

(30) Priority: 03.05.2006 US 381486
(43) Date of publication of application: 07.11.2007
(73) Proprietor: APPLE INC., Cupertino, CA 95014 (US)
(72) Inventor: Farrugia, Augustin J., CUPERTINO, 95014 (US); Fasoli, Gianpaolo, PALO ALTO, 94301 (US); Riendeau, Jean-François, CUPERTINO, 95014 (US)
(74) Representative: Howell, Matthew Dafydd

(56) References cited:
- EP-A1- 1 777 639
- WO-A1-2004/070588
- WO-A1-2004/097609
- WO-A1-2005/106681
- US-A1- 2003 084 306
- US-A1- 2006 053 079
- US-B1- 6 886 098

## Description

### FIELD OF THE INVENTION

The invention relates to device-independent management of cryptographic information.

### BACKGROUND OF THE INVENTION

The protection of digital content transferred between computers over a network is fundamentally important for many enterprises today. Enterprises attempt to secure this protection by implementing some form of Digital Rights Management (DRM) process. The DRM process often involved encrypting the piece of content (e.g., encrypting the binary form of the content) to restrict usage to those who have been granted a right to the content.

United States Patent 6,886,098 issued to Benolah et al. describes systems, methods and a modulated data signal that provide a way to derive a single key from which a user can extract virtually any number of data encryption keys. Also, WO 2004/070588 by Nokia Corp. et al. describes a method, devices, and system for distributing rights to a digital content and for accessing said digital content.

Cryptography is the traditional method of protecting data in transit across a network. In its typical application, cryptography protects communications between two parties from thievery by attack on the data in transit. However, for many digital file transfer applications today (e.g., for the transfer of audio or video content) the paradigm has shifted, as a party that receives the content (i.e. the "receiving party") might try to break the DRM encryption that the party that supplied the content (i.e., the "distributing party") applied to the content. In addition, with the proliferation of network penetration attacks, a third party may obtain access to the receiving party's computer and thus to the protected content.

In many of the DRM systems today, the weakest link in the security is not the encrypted data but rather the cryptographic key management and handling. For instance, one of the more successful DRM systems, which distribute music online, requires the receiving party's computer to maintain the unencrypted key for each piece of music in a "Keybag" that is encrypted.

This approach has two disadvantages. First, by encrypting the Keybag instead of the keys contained in the Keybag, this approach exposes the keys to a potential attack at different instances in time. For instance, each time the receiving party's computer has to store a new key for a piece of content, the computer has to decrypt the entire Keybag, add the new key to the Keybag, and then re-encrypt the Keybag. Similarly, to play a piece of content, the receiving party's computer has to decrypt the entire Keybag, retrieve the key for the piece of content, and decrypt the content with the retrieved key. In either of these situations, all the keys are exposed to a potential attacker when the Keybag is decrypted.

Second, this prior DRM approach allows different devices to use different formats for their Keybags. For instance, it allows a receiving party's computer to use a different Keybag format than a music player to which the computer downloads its music. The use of different Keybag formats for different devices further exposes the keys for decrypting the content that is transferred between the devices. For instance, when the receiving party synchronizes the music player's music library with that of the computer, the computer has to decrypt its Keybag and transfer the synchronized content and its associated keys to the music player. The music player then stores the received content in a storage device, and stores the received keys in the player's particular format in the player's Keybag. During this transfer, all the keys are exposed to a potential attacker.

Therefore, there is a need in the art for a DRM system that minimizes the exposure of cryptographic keys at various stages of the DRM process. Such a system should minimize exposure during the local storage of the cryptographic keys on the devices that will use such keys to decrypt and access content. This system should also minimize exposure of the cryptographic key while the encrypted content is being access by a receiving device. This system should further minimize exposure of the cryptographic keys while the receiving party is transferring content between two devices.

### SUMMARY OF THE INVENTION

Some embodiments provide an account-based DRM system for distributing content. The system includes several devices that are associated with one particular account. The system also includes a set of DRM computers that receives a request to access a particular piece of content on the devices associated with the particular account. The DRM computer set then generates a several keys for the devices, where each particular key of each particular device allows the particular device to access the particular piece of content on the particular device.

Through a network, the DRM computer set of some embodiments sends the particular piece of content and the generated keys to the devices associated with the particular account. The network is a local area network, a wide area network, or a network of networks, such as the Internet. In some of these embodiments, the DRM computer set sends the content and keys to one device (e.g., a computer), which is used to distribute the content and the key(s) to the other devices associated with the account. In some embodiments, the DRM computer set individually encrypts each key in a format that is used during its transport to its associated device and during its use on this device.

Some embodiments provide a digital rights management (DRM) method for distributing a piece of content to a user. The user has at least two devices for accessing the content. The method sends to the user the piece of content in a protected format. From a set of DRM computers, the method also sends to the user (1) a first key that enables the user to access the protected content on the first device, and (2) a second key that enables the user to access the protected content on the second device.

In some embodiments, the first and second keys are for decrypting the piece of content. In other embodiments, the first and second keys are for decrypting another key or other keys that are used to encrypt the piece of content. The method in some embodiments individually encrypts the first and second keys before sending them to the first and second devices.

Also, in some embodiments, the first device is a user computer and the second device is another device (e.g., portable media player) that synchronizes its content with the user computer. In some of these embodiments, the user computer (1) receives the piece of content and the first and second keys, and (2) provides the received content as well as the second key to the second device subsequently when the second device synchronizes its content with the user computer. In some embodiments, the user computer provides to the second device the content and the second key in the same protected format that it received the content and the second key.

Before sending the content and the keys to the user, the method in some embodiments (1) receives a request from the user to obtain the piece of content, and (2) generates the first and second keys at the set of DRM computers. In some embodiments, the user has more than two devices for accessing the content. In some such embodiments, the method generates at the DRM computer set more than two keys for the user after receiving the user's request for the content. In such a case, each particular generated key is to enable the user to access the content on a particular device associated with the user.

Also, in some of these embodiments, the method individually encrypts each generated key in a format that is used during its transport to its associated device, and during its storage and use on this device. The transport, storage, or usage of any key in these embodiments does not require the decryption of another key that the DRM computer set generates for other devices or contents.

In some embodiments, the first device stores its encrypted keys for decrypting DRM content in a first Keybag, while the second device stores the encrypted keys for decrypting DRM content in a second Keybag. The first and second Keybags have the same format in some embodiments. Using Keybags with the same format minimizes exposure of keys during the transfer of content and keys between the first and second devices, when one of these devices synchronizes its content and keys with the other device. The exposure is minimized because it eliminates operations that are due to transforming data between two different Keybag formats. In some embodiments, the first and second devices encrypt their respective Keybags, while in other embodiments they do not encrypt their respective Keybags but only store individually encrypted keys in those Keybags.

The DRM computer set of some embodiments also sends other DRM material along with the cryptographic keys. Such other DRM data include in some embodiments data relating to the DRM system, such as the DRM type, rules, etc. The other DRM material also includes in some embodiments data relating to the cryptographic key (e.g., the nature of the key, etc.). Other embodiments might include other types of DRM material.

The invention provides the following features taken alone or in combination.

The invention provides a method comprising:
a) defining a plurality of keys for accessing a piece of content on a plurality of related devices; and
b) providing the generated keys.

Said method may advantageously be complemented by the following features:
- the related devices are devices related to one user;
- providing the generated keys comprises providing the keys in one data storage structure;
- each particular key is for accessing the piece of content in a particular device;
- the method further comprising individually encrypting each key in the plurality of keys for accessing the piece of content on the plurality of related devices.

In particular, providing the individually encrypted keys comprises providing the keys in a transport keybag.

The transport keybag may not be encrypted.

The transport keybag may be encrypted.

The transport keybag has a format similar to a format of a keybag used by a particular device to store a key that is provided for the particular device.

As an alternative, providing the keys may comprise providing a particular individually encrypted key for a particular device in a format for storage on the particular device.

The method proposed may also be complemented by the following features:
- it may further comprise providing the piece of content in an encrypted format.
- it may further comprise receiving a request for the piece of content.
- defining the plurality of keys comprises generating a first key for accessing the piece of content on a first device and a second key for accessing the piece of content on a second device.
- the first device is a computer and the second device a media player.

The invention also proposes a method comprising:
a) receiving a request for a piece of content; and
b) supplying the piece of content along with a first key for accessing the piece of content on a first device and a second key for accessing the piece of content on a second device.

Said method may advantageously be complemented by the following features:
- the first and second devices are devices associated with a user that requested the piece of content;
- supplying the piece of content and keys comprises supplying the keys in one data storage structure for transport; in such a case, each key may be individually encrypted in the data storage structure.
- supplying the piece of content and keys comprises:
   a) supplying the piece of content from one computer; and
   b) supplying the keys from at least one other computer.
- supplying the piece of content and keys comprises supplying the piece of content and keys from one computer.

The invention also proposes a computer readable medium storing a program for execution, the program comprising sets of instructions for:
a) defining a plurality of keys for accessing a piece of content on a plurality of related devices; and
b) providing the generated keys.

Said computer readable medium may advantageously be complemented by the following features:
- the related devices are devices related to one user.
- the set of instructions for providing the generated keys comprises a set of instructions for providing the keys in one data storage structure.
- each particular key is for accessing the piece of content in a particular device.
- the program further comprises a set of instructions for individually encrypting the plurality of keys for accessing the piece of content on the plurality of related devices.

In such a case, the set of instructions for providing the individually encrypted keys comprises a set of instructions for providing the keys in a transport keybag.

The transport keybag may not be encrypted.

The transport keybag may be encrypted.

The transport keybag may have a format similar to a format of a keybag used by a particular device to store a key that is provided for the particular device.

As an alternative, the set of instructions for providing the keys comprises a set of instructions for providing a particular individually encrypted key for a particular device in a format for storage on the particular device.

The computer readable medium may also be complemented by the following features:
- the program further comprises a set of instructions for providing the piece of content in an encrypted format.
- the program further comprises a set of instructions for receiving a request for the piece of content.
- the set of instructions for defining the plurality of keys comprises a set of instructions for generating a first key for accessing the piece of content on a first device and a second key for accessing the piece of content on a second device.

In such a case, the first device may be a computer and the second device a media player.

The invention also proposes a method comprising:
a) requesting a piece of content; and
b) receiving (i) the piece of content, (ii) a first key for accessing the piece of content on a first device, and (iii) a second key for accessing the piece of content on a second device.

This method may be complemented by the following features taken alone or in combination:
- the first and second devices are devices associated with a user that requested the piece of content.
- receiving the piece of content and keys comprises receiving the keys in one data storage structure for transport.
- each key is individually encrypted in the data storage structure.
- further comprising extracting the encrypted keys from the data storage structure.
- the first device receives the piece of content and keys, the method further comprising:
   a) extracting the first encrypted key from the data storage structure; and
   b) storing the extracted first key on a storage of the first device in the same format that the first encrypted key was stored in the data storage structure.
- further comprising:
   a) extracting the second key from the data storage structure; and
   b) supplying the extracted second encrypted key to the second device.
- the data storage structure is not encrypted.
- the data storage structure is encrypted.
- receiving the piece of content and keys comprises:
   a) receiving the piece of content from one computer; and
   b) receiving the keys from at least one other computer.
- receiving the piece of content and keys comprises receiving the piece of content and keys from one computer.
- the first device is a computer and the second device a media player.

The invention also proposes a readable storage medium storing a program for execution, the program comprising sets of instructions for:
a) requesting a piece of content; and
b) receiving (i) the piece of content, (ii) a first key for accessing the piece of content on a first device, and (iii) a second key for accessing the piece of content on a second device.

Such readable storage medium may advantageously be complemented by the following features taken alone or in combination:
- the first and second devices are devices associated with a user that requested the piece of content.
- the set of instructions for receiving the piece of content and keys comprises a set of instructions for receiving the keys in one data storage structure for transport.
- each key is individually encrypted in the data storage structure.
- the program further comprises a set of instructions for extracting the encrypted keys from the data storage structure.
- the first device receives the piece of content and keys, wherein the program further comprises sets of instructions for:
   a) extracting the first encrypted key from the data storage structure; and
   b) storing the extracted first encrypted key on a storage of the first device in the same format that the first encrypted key was stored in the data storage structure.
- the program further comprises sets of instructions for:
   a) extracting the second encrypted key from the data storage structure; and
   b) supplying the extracted second encrypted key to the second device.
- the data storage structure is not encrypted.
- the data storage structure is encrypted.
- the set of instructions for receiving the piece of content and keys comprises sets of instructions for:
   a) receiving the piece of content from one computer; and
   b) receiving the keys from at least one other computer.
- the set of instructions for receiving the piece of content and keys comprises a set of instructions for receiving the piece of content and keys from one computer.
- the first device is a computer and the second device a media player.

The invention also proposes a method comprising:
a) at a first device, receiving a piece of content, a first key for accessing the piece of content on the first device, and a second key for accessing the piece of content on a second device;
b) storing the piece of content and the first key on the first device; and
c) supplying the piece of content and the second key to the second device.

The invention also proposes a method comprising:
a) receiving a piece of content;
b) receiving a first key for accessing the piece of content on a first device;
c) receiving a second key for accessing the piece of content on a second device;
d) supplying the piece of content and the first key to the first device; and
e) supplying the piece of content and the second key to the second device. Such method may advantageously be complemented by the following features taken alone or in combination:
   - the first and second devices are devices associated with a user that requested the piece of content, wherein a third device receives the piece of content and supplies the piece of content and the keys to the first and second devices.
   - the first and second devices are media players while the third device is a computer.
   - receiving the keys comprises receiving both keys in one data storage structure for transport.
   - each key is individually encrypted in the data storage structure.
   - the data storage structure is not encrypted.
   - the data storage structure is encrypted.
   - further comprising:
      before supplying the content and keys to the devices, specifying the devices as two devices that need to receive the piece of content and their associated keys.
   - the first and second keys are encrypted when received, the method further comprising supplying first and second keys respectively to first and second devices in the same encrypted format that the key is received.
   - receiving the keys comprises receiving both keys in a first data storage structure, wherein supplying the first and second keys comprises supplying the first and second keys respectively in second and third data storage structures with the same format as the first data storage structure.
   - the first and second devices respectively store the supplied first and second keys in the encrypted format that the key is received.
   - receiving the piece of content and keys comprises:
      a) receiving the piece of content from one computer; and
      b) receiving the keys from at least one other computer.
   - receiving the piece of content and keys comprises receiving the piece of content and keys from one computer.

The invention also proposes a readable storage medium storing a program for execution, the program comprising sets of instructions for:
a) receiving a piece of content, a first key for accessing the piece of content on the first device, and a second key for accessing the piece of content on a second device;
b) storing the piece of content and the first key on the first device; and
c) supplying the piece of content and the second key to the second device. Such readable storage medium may advantageously be complemented by the following features taken alone or in combination:
   - storing a program for execution, the program comprising sets of instructions for:
      a) receiving a piece of content;
      b) receiving a first key for accessing the piece of content on a first device;
      c) receiving a second key for accessing the piece of content on a second device;
      d) supplying the piece of content and the first key to the first device; and
      e) supplying the piece of content and the second key to the second device.
   - the first and second devices are devices associated with a user that requested the piece of content, wherein a third device receives the piece of content and supplies the piece of content and the keys to the first and second devices.
   - the first and second devices are media players while the third device is a computer.
   - the set of instructions for receiving the keys comprises a set of instructions for receiving both keys in one data storage structure for transport.
   - each key is individually encrypted in the data storage structure.
   - the data storage structure is not encrypted.
   - the data storage structure is encrypted.
   - the program further comprises a set of instructions for:
      before supplying the content and keys to the devices, specifying the devices as two devices that need to receive the piece of content and their associated keys.
   - the first and second keys are encrypted when received, wherein the program further comprises a set of instructions for supplying first and second keys respectively to first and second devices in the same encrypted format that the key is received.
   - the set of instructions for receiving the keys comprises a set of instructions for receiving both keys in a first data storage structure, wherein the set of instructions for supplying the first and second keys comprises a set of instructions for respectively supplying the first and second keys in second and third data storage structures with the same format as the first data storage structure.
   - the first and second devices respectively store the supplied first and second keys in the encrypted format that the key is received.
   - the set of instructions for receiving the piece of content and keys comprises sets of instructions for:
      a) receiving the piece of content from one computer; and
      b) receiving the keys from at least one other computer.
   - the set of instructions for receiving the piece of content and keys comprises a set of instructions for receiving the piece of content and keys from one computer.

The invention also proposes a method comprising:
a) individually encrypting a plurality of keys for accessing a piece of content on a plurality of related devices; and
b) providing the individually encrypted keys together.

Such method may advantageously be complemented by the following features taken alone or in combination:
- each particular key is for accessing the piece of content in a particular device.
- providing the individually encrypted keys together comprises providing the keys in a transport keybag.
- the transport keybag is not encrypted.
- the transport keybag is encrypted.
- the transport keybag has a format similar to a format of a keybag used by a particular device to store a key that is provided for the particular device.
- providing the keys comprises providing a particular individually encrypted key for a particular device in a format for storage on the particular device.
- further comprising providing the piece of content in an encrypted format.
- the related devices are devices related to one user.

The invention also proposes a computer readable medium storing a program for execution, the program comprising sets of instructions for:
a) individually encrypting a plurality of keys for accessing a piece of content on a plurality of related devices; and
b) providing the individually encrypted keys together.

Such computer readable medium may advantageously be complemented by the following features taken alone or in combination:
- each particular key is for accessing the piece of content in a particular device.
- the set of instructions for providing the individually encrypted keys together comprises a set of instructions for providing the keys in a transport keybag.
- the transport keybag is not encrypted.
- the transport keybag is encrypted.
- the transport keybag has a format similar to a format of a keybag used by a particular device to store a key that is provided for the particular device.
- the set of instructions for providing the keys comprises a set of instructions for providing a particular individually encrypted key for a particular device in a format for storage on the particular device.
- the program further comprises set of instructions for providing the piece of content in an encrypted format.
- the related devices are devices related to one user.

The invention also proposes a method comprising:
a) receiving an encrypted key in a data storage structure, the encrypted key for accessing a piece of content on a device; and
b) storing the encrypted key on the device in the same format that the encrypted key was stored in the data storage structure.

Such method may advantageously be complemented by the following features taken alone or in combination:
- further comprising extracting the encrypted key from the data storage structure.
- the data storage structure is a keybag for transporting individually encrypted keys to the device.
- the keybag is not encrypted.
- the keybag is encrypted.
- receiving an encrypted key comprises receiving a plurality of individually encrypted keys in the data storage structure, each different encrypted key for accessing the piece of content on a different device.
- the method further comprises:
- the plurality of devices comprise at least first and second devices,
- the plurality of keys comprises first and second keys,
- the first device receives the plurality of keys and stores the first key in a storage of the first device,
- the method further comprising providing the second key to the second device.
- the first device is a computer and the second device a media player.
- further comprising:
   a) receiving the piece of content;
   b) providing the piece of content to at least one of the different devices; and
   c) providing at least one of the received key to a device to which the piece of content is provided.

The invention also proposes a readable storage medium storing a program for execution, the program comprising sets of instructions for:
a) receiving an encrypted key in a data storage structure, the encrypted key for accessing a piece of content on a device; and
b) storing the encrypted key on the device in the same format that the encrypted key was stored in the data storage structure.

Such readable storage medium may advantageously be complemented by the following features taken alone or in combination:
- the program further comprises a set of instructions for extracting the encrypted key from the data storage structure.
- the data storage structure is a keybag for transporting individually encrypted keys to the device.
- the keybag is not encrypted.
- the keybag is encrypted.
- the set of instructions for receiving the encrypted key comprises a set of instructions for receiving a plurality of individually encrypted keys in the data storage structure, each different encrypted key for accessing the piece of content on a different device.
- the method further comprises:
- the plurality of devices comprise at least first and second devices,
- the plurality of keys comprises first and second keys,
- the first device receives the plurality of keys and stores the first key in a storage of the first device,
- the program further comprises a set of instructions for providing the second key to the second device.
- the first device is a computer and the second device a media player.
- the program further comprises sets of instructions for:
   a) receiving the piece of content;
   b) providing the piece of content to at least one of the different devices; and
   c) providing at least one of the received key to a device to which the piece of content is provided.

The invention also proposes a method comprising:
a) receiving a first set of content;
b) receiving a first data storage structure comprising a plurality of keys for accessing pieces of content in the first set on a device; and
c) storing the plurality of keys in a second data storage structure of the device, the second data storage structure having a format that is similar to the format of the first data storage structure.

The invention also proposes a method comprising:
a) receiving a first set of content;
b) receiving a first data storage structure comprising a plurality of individually encrypted keys for accessing pieces of content in the first set on a device; and
c) in a second data storage structure of the device, storing each key in the individually encrypted format of the first data storage structure.

The invention also proposes a readable storage medium storing a program for execution, the program comprising sets of instructions for:
a) receiving a first set of content;
b) receiving a first data storage structure comprising a plurality of keys for accessing pieces of content in the first set on a device; and
c) storing the plurality of keys in a second data storage structure of the device, said second data storage structure having a format that is similar to the format of the first data storage structure.

The invention also proposes a readable storage medium storing a program for execution, the program comprising sets of instructions for:
a) receiving a first set of content;
b) receiving a first data storage structure comprising a plurality of individually encrypted keys for accessing pieces of content in the first set on a device; and
c) in a second data storage structure of the device, storing each key in the individually encrypted format of the first data storage structure.

The invention also proposes a media player comprising a readable storage storing a plurality of pieces of content and a data storage structure for storing individually encrypted keys, each particular individually encrypted key for accessing a particular piece of content.

Such media player may advantageously be complemented by the following features taken alone or in combination:
- the data storage structure is encrypted.
- the data storage structure is not encrypted.
- the player receives (i) new pieces of content and (ii) new keys in a data storage structure that has the same format as the data storage structure of the media player.
- the new keys are individually encrypted in the received data storage structure and are stored in the same format in the data storage structure of the media player.

The invention also proposes a data storage structure stored on a readable storage medium, the data storage structure comprising a plurality of keys, each key individually encrypted, each key for accessing a piece of content associated with a particular account.

Such data storage structure red on a readable storage medium may advantageously be complemented by the following features taken alone or in combination:
- the keys are for accessing pieces of content associated with a particular account on a particular device.
- the keys are for accessing pieces of content associated with a particular account on different devices.
- the data storage structure is encrypted.
- the data storage structure is not encrypted.

The invention also proposes a method comprising:
a) determining that a new device has been specified for accessing content associated with a particular account;
b) for the new device, generating a key for each piece of content associated with the particular account; and
c) providing each generated key.

Such method may advantageously be complemented by the following features taken alone or in combination:
- generating the key comprises generating a plurality of keys, wherein each particular key is for accessing a particular piece of content on the new device.
- providing each generated key comprises providing a plurality of keys in one data storage structure.
- further comprising encrypting each generated key individually.
- the data storage structure is not encrypted.
- the data storage structure is encrypted.
- providing the keys comprises providing a particular individually encrypted key in a format for storage on the new device.
- the data storage structure has a format similar to a format of a data storage structure used by the new device to store a provided key.
- providing each generated key comprises providing each key to a computer that is associated with the particular account, wherein the computer is for transferring each generated key to the new device.
- the new device is a media player.
- further comprising identifying pieces of content associated with the particular account.
- further comprising determining whether the new device can be associated with the account.

The invention also proposes a computer readable medium storing a program for execution, the program comprising sets of instructions for:
a) determining that a new device has been specified for accessing content associated with a particular account;
b) for the new device, generating a key for each piece of content associated with the particular account; and
c) providing each generated key.

Such computer readable medium may advantageously be complemented by the following features taken alone or in combination:
- the set of instructions for generating the key comprises a set of instructions for generating a plurality of keys, wherein each particular key is for accessing a particular piece of content on the new device.
- the set of instructions for providing each generated key comprises a set of instructions for providing a plurality of keys in one data storage structure.
- the program further comprises a set of instructions for encrypting each generated key individually.
- the data storage structure is not encrypted.
- the data storage structure is encrypted.
- the set of instructions for providing the keys comprises a set of instructions for providing a particular individually encrypted key in a format for storage on the new device.
- the data storage structure has a format similar to a format of a data storage structure used by the new device to store a provided key.
- the set of instructions for providing each generated key comprises a set of instructions for providing each key to a computer that is associated with the particular account, wherein the computer is for transferring each generated key to the new device.
- the new device is a media player.
- further comprising identifying pieces of content associated with the particular account.
- further comprising determining whether the new device can be associated with the particular account.

The invention also proposes a method comprising:
a) receiving a plurality of key for a device associated with a particular account, each particular key for accessing on the device a particular piece of content associated with the particular account; and
b) supplying the plurality of key to the device.

Such method may advantageously be complemented by the following features taken alone or in combination:
- the device is a new device being associated with the particular account.
- receiving the keys comprises receiving the keys in one data storage structure.
- each key is individually encrypted in the data storage structure.
- the data storage structure is not encrypted.
- the data storage structure is encrypted.
- receiving the keys comprises receiving a particular individually encrypted key in a format for storage on the device.
- the data storage structure has a format similar to a format of a data storage structure used by the device to store a received key.
- a computer receives the keys and supplies the keys to the device.
- the new device is a media player.

The invention also proposes a readable storage medium storing a program for execution, the program comprising sets of instructions for:
a) receiving a plurality of key for a device associated with a particular account, each particular key for accessing on the device a particular piece of content associated with the particular account; and
b) supplying the plurality of key to the device.

Such readable storage medium may advantageously be complemented by the following features taken alone or in combination:
- the device is a new device being associated with the particular account.
- the set of instructions for receiving the keys comprises a set of instructions for receiving the keys in one data storage structure.
- each key is individually encrypted in the data storage structure.
- the data storage structure is not encrypted.
- the data storage structure is encrypted.
- the set of instructions for receiving the keys comprises a set of instructions for receiving a particular individually encrypted key in a format for storage on the device.
- the data storage structure has a format similar to a format of a data storage structure used by the device to store a received key.
- a computer receives the keys and supplies the keys to the device.
- the new device is a media player.

The invention also proposes a digital rights management (DRM) method for distributing a piece of content to a user, said user having first and second devices for accessing the content, the method comprising:
a) sending to the user the piece of content in a protected format
b) from a set of DRM computers, sending to the user a first key that enables the user to access the protected content of the first device
c) from the set of DRM computers, sending to the user a second key that enables the user to access the protected content on the second device.

The invention also proposes a digital rights management (DRM) system for distributing content, the system comprising :
a) a plurality of devices associated with one account
b) a set of DRM computers for receiving a request to access a particular piece of content on the devices associated with the account, and for generating a plurality of keys for said devices, wherein each particular key of each particular device allows the particular device to access the particular piece of content on the particular device.

The invention also proposes a digital rights management (DRM) method for distributing a particular piece of content to a plurality of users, the method comprising:
a) generating a first set of keys and a second set of keys at a DRM computer;
b) through a network, sending the first set of keys to a first user and the second set of keys to a second user;
c) accessing the particular piece of content on first and second sets of devices associated with first and second users, wherein each particular device of each particular user uses at least one key in the set of keys for the particular user to access the particular piece of content.

### BRIEF DESCRIPTION OF THE DRAWINGS

The novel features of the invention are set forth in the appended claims. However, for purpose of explanation, several embodiments are set forth in the following figures.
**Figure 1** illustrates an account-based DRM system of some embodiments.
**Figure 2** illustrates an example of a transport Keybag for a user computer.
**Figure 3** illustrates a transport Keybag that includes all the cryptographic keys that a device M might receive from the user computer during a synchronization operation.
**Figure 4** illustrates that in some embodiments the cryptographic key that is used to access a particular piece of content on a particular device (1) is generated and stored on the DRM server set, and (2) is stored on the particular device.
**Figure 5** conceptually illustrates a process that the DRM server set performs to process a request from a user account to purchase or license a particular piece of content.
**Figure 6** conceptually illustrates a process that the DRM server set performs in some embodiments when it detects that a new device is being added to a user account.
**Figure 7** conceptually illustrates a process that a user computer performs when it needs to purchase or license a particular piece of content for a particular user account.

### DETAILED DESCRIPTION OF THE INVENTION

In the following description, numerous details are set forth for the purpose of explanation. However, one of ordinary skill in the art will realize that the invention may be practiced without the use of these specific details. In other instances, well-known structures and devices are shown in block diagram form in order not to obscure the description of the invention with unnecessary detail.

### I. OVERVIEW

Some embodiments provide a digital rights management (DRM) method for distributing a piece of content to a user. The user has at least two devices for accessing the content. The method sends to the user the piece of content in a protected format. From a set of DRM computers, the method also sends to the user (1) a first key that enables the user to access the protected content on the first device, and (2) a second key that enables the user to access the protected content on the second device.

In some embodiments, the first and second keys are for decrypting the piece of content. In other embodiments, the first and second keys are for decrypting another key or other keys that are used to encrypt the piece of content. The method in some embodiments individually encrypts the first and second keys before sending them to the first and second devices.

Also, in some embodiments, the first device is a user computer and the second device is another device (e.g., portable media player) that synchronizes its content with the user computer. In some of these embodiments, the user computer (1) receives the piece of content and the first and second keys, and (2) provides the received content as well as the second key to the second device subsequently when the second device synchronizes its content with the user computer. In some embodiments, the user computer provides to the second device the content and the second key in the same protected format that it received the content and the second key.

Before sending the content and the keys to the user, the method in some embodiments (1) receives a request from the user to obtain the piece of content, and (2) generates the first and second keys at the set of DRM computers. In some embodiments, the user has more than two devices for accessing the content. In some such embodiments, the method generates at the DRM computer set more than two keys for the user after receiving the user's request for the content. In such a case, each particular generated key is to enable the user to access the content on a particular device associated with the user.

Also, in some of these embodiments, the method individually encrypts each generated key in a format that is used during its transport to its associated device, and during its storage and use on this device. The transport, storage, or usage of any key in these embodiments does not require the decryption of another key that the DRM computer set generates for other devices or contents.

In some embodiments, the first device stores its encrypted keys for decrypting DRM content in a first Keybag, while the second device stores the encrypted keys for decrypting DRM content in a second Keybag. The first and second Keybags have the same format in some embodiments. Using Keybags with the same format minimizes exposure of keys during the transfer of content and keys between the first and second devices, when one of these devices synchronizes its content and keys with the other device. The exposure is minimized because it eliminates operations that are due to transforming data between two different Keybag formats. In some embodiments, the first and second devices encrypt their respective Keybags, while in other embodiments they do not encrypt their respective Keybags but only store individually encrypted keys in those Keybags.

The DRM computer set of some embodiments sends other DRM material along with the cryptographic keys. Such other DRM data include in some embodiments data relating to the DRM system, such as the DRM type, rules, etc.. The other DRM material also includes in some embodiments data relating to the cryptographic key (e.g., the nature of the key, etc.). Other embodiments might include other types of DRM material.

### II. ACCOUNT-BASED DRM SYSTEM

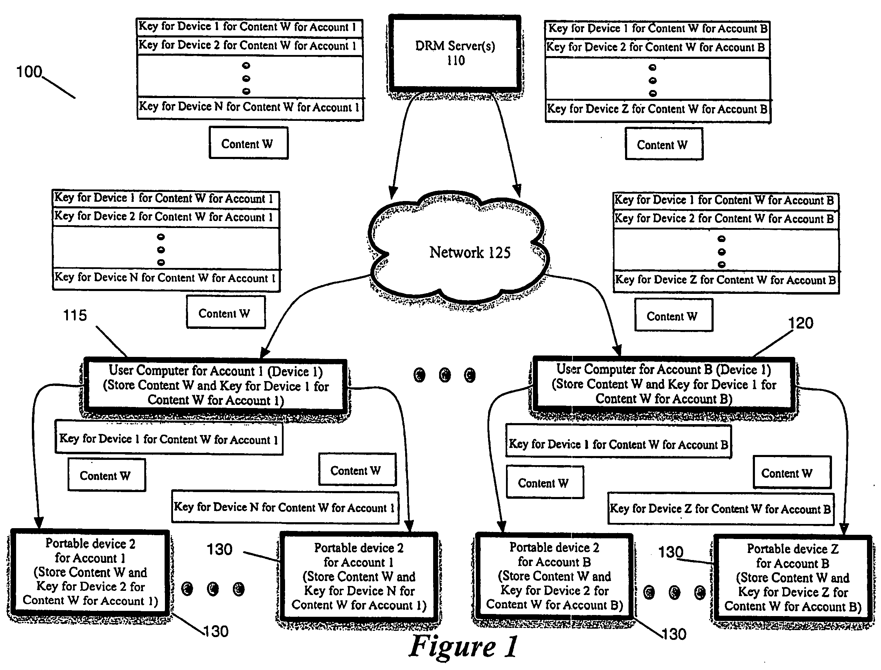

**Figure 1** illustrates an account-based DRM system 100 of some embodiments. This DRM system distributes content in a manner that ensures the legal use of the content. As shown in **Figure 1****,** the DRM system 100 includes a set of DRM servers 110 that distribute content to several devices associated with B user accounts. This figure illustrates two sets of devices associated with two accounts, account 1 and account B. The set of devices for account 1 includes a user computer 115 and several portable media device 130. In the example illustrated in **Figure 1****,** the devices for the two different user accounts are mutually exclusive. This might not be the case in some embodiments. Some embodiments might allow one device (e.g., one user computer, etc.) to process DRM content for two different user accounts.

The DRM server set 110 connects to the user computers 115 and 120 through a computer network 125, such as a local area network, a wide area network, a network of networks (e.g., the Internet), etc. Through this connection, the user computers 115 and 120 communicate with the DRM server set 110 to purchase, license, update, or otherwise obtain content in some embodiments. While in some embodiments, the DRM server set 110 sells or licenses content to the user computers, this set in other embodiments does not sell or license the content. For instance, in some of embodiments, the DRM server set 110 simply enforces the distribution of content to authorized computers without having any financial objective.

In some embodiments, the DRM server set 110 includes a content caching server that provides encrypted content to a user computer 115 or 120 through the network 125, after another DRM server 110 determines that the computer 115 or 120 can obtain the content. In some embodiments, the system 100 uses multiple caching servers to cache content at various locations on the network, in order to improve the speed and efficiency of downloading content across the network.

As mentioned above, a user computer 115 or 120 that is associated with a particular account communicates with the DRM server set 110 to purchase, license, update, or otherwise obtain content through the network 125 for the particular account. In some embodiments, the DRM server set 110 (1) supplies each requested piece of content in an encrypted format, and (2) for each device associated with the requesting account, supplies a cryptographic key for decrypting the encrypted content.

**Figure 1** illustrates an example of the DRM server set 110 distributing one piece of encrypted content (content W) to the devices associated with the two different user accounts 1 and B. As shown in this figure, the DRM server set distributes the encrypted content W to both user computers 115 and 120, along with a set of cryptographic keys for accessing this content on each device associated with the user accounts 1 and B.

The DRM server set distributes the content W and each set of cryptographic keys in an encrypted format. Also, in some embodiments, each cryptographic key in the set is encrypted individually. The DRM server set 110 of some embodiments provides the cryptographic key set in a transport Keybag. A Keybag is a data storage structure that stores the cryptographic keys according to a particular format. The transport Keybag is encrypted in its entirety for the transport in some embodiments, while it is not encrypted for the transport in other embodiments.

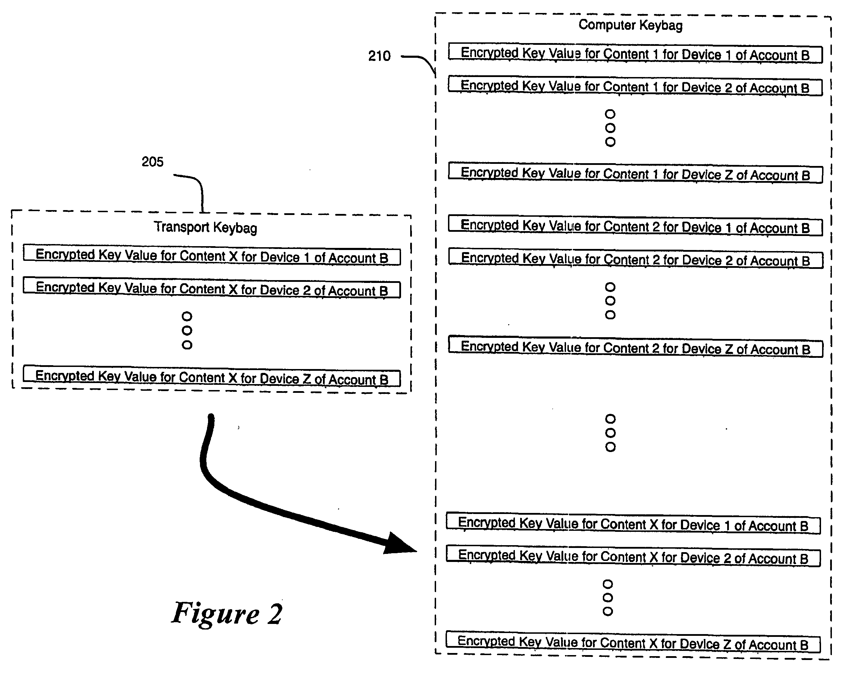

**Figure 2** illustrates an example of such a transport Keybag 205 for the user computer 120. As shown in this figure, the user computer 120 extracts each individually encrypted key from the transport Keybag 205 and stores these keys in a Keybag 210 that it maintains. The keys in the Keybag 210 are the same as the keys in the Keybag 205 (i.e., they are individually encrypted in the same format as they appear in Keybag 205). Also, the Keybags 205 and210 are encrypted in their entirety in some embodiments, while they are not encrypted in other embodiments.

**Figure 1** illustrates that each user computer 115 or 120 stores the received encrypted content W and the cryptographic key that it receives for accessing this content. Each user computer 115 or 120 also provides each portable media device 130 that synchronizes with it the received encrypted content W and the cryptographic key that the user computer received for the portable media device.

For instance, as shown in **Figure 1**, the user computer 115 provides to device 2 for account 1 the received encrypted content W plus the cryptographic key for accessing the encrypted content W on device 2. The user computer 120, on the other hand, provides to device Z for account B the received encrypted content W plus the cryptographic key for accessing the encrypted content W on device Z.

In some embodiments, each user computer deletes a cryptographic key that it provides to another device after the synchronization operation, while in other embodiments, each user computer continues to store the cryptographic keys that it provides to devices that synchronize their content with the computer.

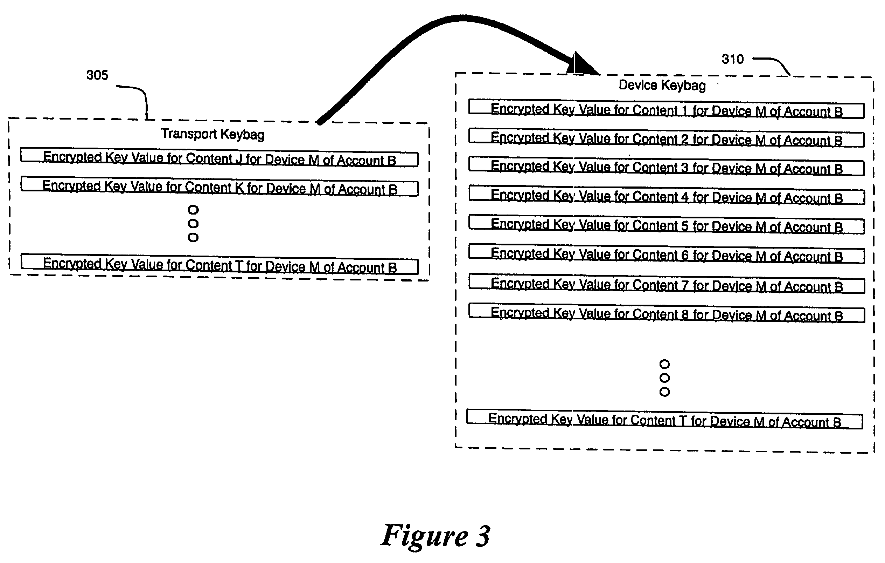

In some embodiments, each synchronizing device stores in a Keybag the cryptographic keys that it receives from its associated user computer. **Figure 3** illustrates an example of this for one of the device (device M) associated with the account B. Specifically, this figure illustrates a transport Keybag 305 that includes all the cryptographic keys that a device M might receive from the user computer 120 during a synchronization operation. As shown in this figure, the device M extracts each individually encrypted key from the transport Keybag 305 and stores these keys in a Keybag 310 it maintains. The keys in the Keybag 310 are the same as the keys in the Keybag 305 (i.e., they are individually encrypted in the same format as they appear in Keybag 305). Also, the Keybags 305 and310 are encrypted in their entirety in some embodiments, while they are not encrypted in other embodiments.

In some embodiments, the Keybags 205, 210, 305, and 310 all have the same format. Using Keybags with the same format minimizes exposure of keys during the transfer of the cryptographic keys between the DRM server set, user computers, and the other devices associated with the accounts. The exposure is minimized because using the same format eliminates operations that are due to transforming data between two different Keybag formats. Also, individually encrypting each key has the advantage that a device can decrypt and use any encrypted key for a particular piece of content, without decrypting another encrypting key, which the device does not need for the particular piece of content.

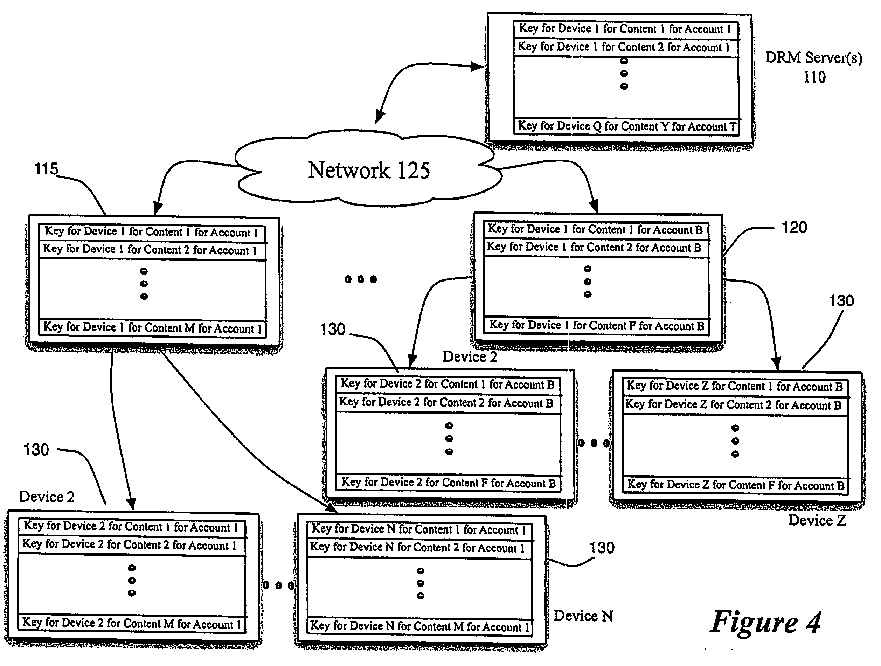

**Figure 4** illustrates that in some embodiments the cryptographic key that is used to access a particular piece of content on a particular device (1) is generated and stored on the DRM server set, and (2) is stored on the particular device. Specifically, this figure illustrates a DRM architecture where the DRM server set 110 generates and stores the cryptographic keys for each piece of content that this set directly or indirectly distributes to each device associated with each user account. This figure also illustrates that the user computers 115 and 120 that initially receive the DRM content for each account store at least the cryptographic key for accessing each piece of content on the user computers. As mentioned above, each user computer in some embodiments also stores the cryptographic key for accessing the received content on each device that synchronizes with the computer.

**Figure 4** also illustrates that each device stores the cryptographic keys for accessing each piece of content that it is allowed to access. In some embodiments, each cryptographic key generated by the DRM server set for a particular device is for decrypting a piece of content on the particular device. In other embodiments, each such key is for decrypting another key or other keys that the particular device uses to decrypt content.

**Figures 1** and **4** illustrate user computers 115 and 120 that receive content and cryptographic keys from the DRM server set and synchronize the content and cryptographic keys with other devices associated with accounts 1 and B. One of ordinary skill will realize that some embodiments might have multiple devices (e.g., computers, portable electronic or communication devices, etc.) that directly receive content from the DRM server set 110 through a communication network. Also, one of ordinary skill will realize that the user computer 115 or 120 can be embedded in any type of device, such as a consumer or commercial electronic device, a home media center or hub, etc.

As mentioned above, the DRM server set of some embodiments sends other DRM material along with the cryptographic keys. Such other DRM data include in some embodiments data relating to the DRM system, such as the DRM type, rules, etc. The other DRM material also includes in some embodiments data relating to the cryptographic key (e.g., the nature of the key, etc.). Other embodiments might include other types of DRM material.

### III. KEY GENERATION AND DISTRIBUTION FLOW

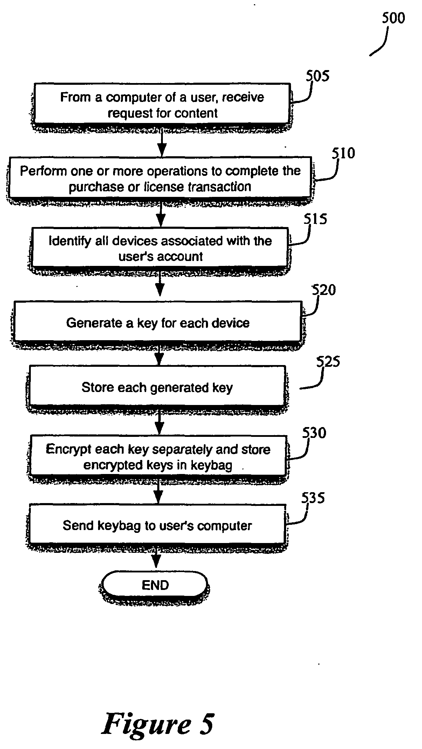

**Figures 5-7** conceptually illustrate several processes for generating keys and distributing content and keys in some embodiments. These processes are described in the context of a purchase or a license of a particular piece of content. One of ordinary skill will realize that these processes can be performed without any of the financial objective or transactions in other embodiments.

**Figure 5** conceptually illustrates a process 500 that the DRM server set performs to process a request from a user account to purchase or license a particular piece of content. The content may be any form of content, such as a music file, a video file, a document, an image, etc. As shown in this figure, the process 500 starts when it receives (at 505) a request for the particular content from a user computer that synchronizes all the keys and content for a particular user account.

The process then performs (at 510) a set of one or more operations to complete the purchase or license transaction. Next, the process identifies (at 515) all the devices associated with the particular user account. At 520, the process then generates a cryptographic key for each device associated with the particular user account. The cryptographic key for each particular device is the key that would allow the particular device to access an encrypted version of the particular piece of content.

At 525, the process then stores each cryptographic key that it generated at 520. Next, at 530, the process individually encrypts each key that it generated at 520. At 530, the process also stores the individually encrypted keys in a Keybag. In some embodiments, the process 500 first performs the encryption operation at 530 and then performs the storage operation at 525. At 535, the process sends the Keybag produced at 530 to the user computer, and then ends. Along with the Keybag or within the Keybag, the process in some embodiments sends (at 535) other DRM material, as discussed above.

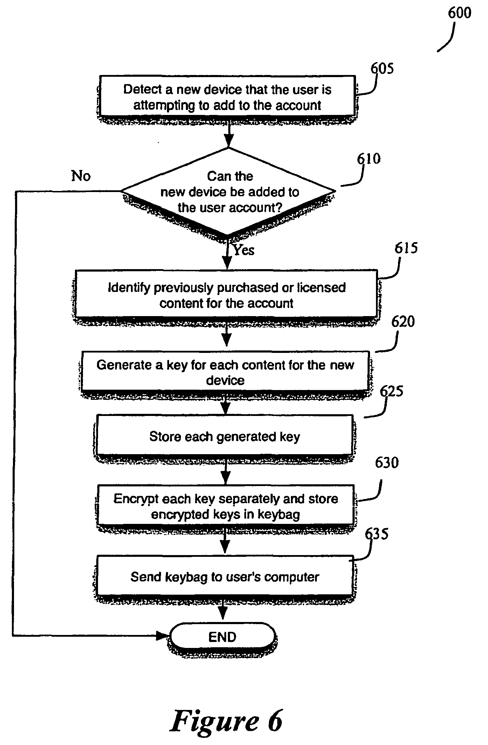

**Figure 6** conceptually illustrates a process 600 that the DRM server set performs in some embodiments when it detects that a new device is being added to a user account. As shown in this figure, the process 600 starts (at 605) when it detects that a new device is being added to a user account. The process can detect this when a new user account is being initially set up or it can detect this when a user computer attempts to synchronize content with a new device.

At 610, the process determines whether a new device can be added to the user account. In some embodiments, this determination involves a determination whether a maximum number of devices had already been added to the user account. If the process determines (at 610) that the device cannot be added, the process ends without adding the device to the user account.

Otherwise, the process identifies (at 615) all the content that was previously purchased or licensed for the user account. For each piece of previously purchased or licensed content, the process then generates (at 620) a key for new device. The process then stores (at 625) each generated key. Next, the process individually encrypts (at 630) each key that it generated at 620. In some embodiments, the process 600 first encrypts each key and then stores the encrypted keys (i.e., first performs the encryption operation at 630 and then performs the storage operation at 625).

At 630, the process then stores the individually encrypted keys in a transport Keybag, which it then sends (at 635) to the user computer associated with the new device. Along with the Keybag or within the Keybag, the process in some embodiments sends (at 635) other DRM material, as discussed above. After 635, the process ends.

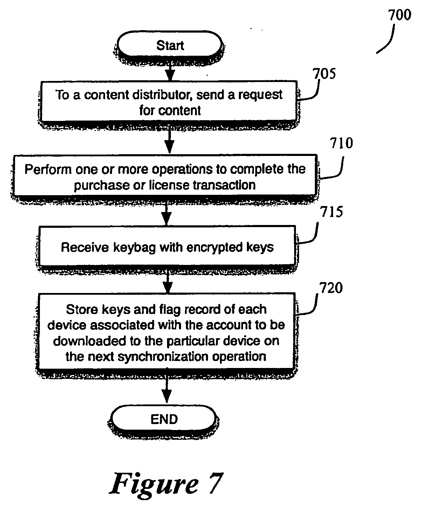

**Figure 7** conceptually illustrates a process 700 that a user computer performs when it needs to purchase or license a particular piece of content for a particular user account. As shown in this figure, the process starts (at 705) when the user computer sends a request to the DRM server set to purchase or license a particular piece of content for the particular user account. Next, at 710, the process performs one or more operations to complete the purchase or license transaction.

At 715, the process then receives the requested piece of content in an encrypted format, plus a transport Keybag that includes a cryptographic key for each device that is associated with the particular user account and that can access the encrypted content. In some embodiments, the cryptographic keys are individually encrypted in the transport Keybag.

At 720, the process extracts the cryptographic keys from the transport Keybag and stores these keys in a Keybag of the user computer. The transport Keybag and the computer Keybag have the same format in some embodiments. The process also flags (at 720) a record that it keeps for each particular synchronizing device associated with the particular user account. This flagging is to notify the user computer on the next synchronization with the particular device that the user computer needs to download newly received encrypted content and cryptographic key(s) to the particular device. After 720, the process ends.

### IV. ENCRYPTION

As described above, several embodiments of the invention provide DRM processes and systems for distributing content. These processes and systems encrypt and decrypt content based on cryptographic keys. Encrypting content entails transforming the content from a decipherable form (called plaintext) into an indecipherable form (called ciphertext) based on one or more cryptographic keys. Decrypting content entails transforming encrypted content into a decipherable from by using one or more cryptographic keys.

An encryption key is a piece of information that controls the operation of a cryptography algorithm. In symmetrical encryption technology, the key that is used to encrypt content is the same key that is used to decrypt content. In asymmetric encryption technology, the same key is not used to encrypt and decrypt the content. For instance, in one scheme, an encrypting device uses a public key of a recipient to encrypt content, and the recipient uses its private key to decrypt the encrypted content.

Many of the features of the embodiments described above can be implemented according to a symmetrical or asymmetrical encryption approach. Also, in some embodiments, the encryption is applied to a binary format of the content. Although the unencrypted binary format of a piece of content may be hard for a human to decipher, it can be deciphered by an application or an operating system. On the other hand, encrypted binary format of a piece of content ideally should not be deciphered by any application or operating system, without first being decrypted by using one or more cryptographic keys.

While the invention has been described with reference to numerous specific details, one of ordinary skill in the art will recognize that the invention can be embodied in other specific forms without departing from the spirit of the invention. For instance, several embodiments described above illustrate the portable devices as devices that only receive DRM content through their synchronization with other user computers. One of ordinary skill will understand, however, that in some embodiments the portable players might directly access the DRM server(s) through a network, in order to obtain DRM content without interfacing with another intermediary computer that can obtain and access the DRM content. Thus, one of ordinary skill in the art would understand that the invention is not to be limited by the foregoing illustrative details, but rather is to be defined by the appended claims.

## Claims

1. A readable storage medium storing a program for execution, the program comprising sets of instructions for:
at a first device (115) that is associated with an account, requesting a piece of content;
receiving (i) the piece of content in a protected format and (ii) a data storage structure storing a first individually encrypted key for accessing the piece of content on the first device, and additional individually encrypted keys for accessing the piece of content on each other device (130) associated with the account, wherein when each of the other devices associated with the account synchronizes with the first device, the piece of content and the individually encrypted key for accessing the piece of content on the synchronizing device are distributed to the synchronizing device;
extracting the first individually encrypted key from the data storage structure; and
storing the received piece of content and the received individually encrypted keys on a storage of the first device in the same format that the first individually encrypted key is stored in the data storage structure.

2. The readable storage medium of claim 1, wherein the program further comprises a set of instructions for extracting the additional individually encrypted keys from the data storage structure.

3. The readable storage medium of claim 1, wherein the program further comprises a set of instructions for synchronizing with a second device by distributing one of the additional individually encrypted keys to the second device.

4. The readable storage medium of claim 1, wherein the first device is a computer and at least one of the other devices is a media player.

5. The readable storage medium of claim 1, wherein the first device and the other devices are associated with a user through the account for receiving content.

6. The readable storage medium of claim 1, wherein the data storage structure is a transport keybag.

7. The readable storage medium of claim 6, wherein the transport keybag is not encrypted.

8. The readable storage medium of claim 6, wherein the transport keybag is encrypted.

9. The readable storage medium of claim 3, wherein the second individually encrypted key is distributed to the second device for storage on the second device in the same format that the second individually encrypted key is stored in the data storage structure.

10. The readable storage medium of claim 3, wherein the data storage structure is a first data storage structure, wherein synchronizing with the second device comprises distributing the one of the additional individually encrypted keys in a second data storage structure with the same format as the first data storage structure.

11. A method comprising:
at a first device (115) that is associated with an account, requesting a piece of content;
receiving (i) the piece of content in a protected format and (ii) a data storage structure storing a first individually encrypted key for accessing the piece of content on the first device, and additional individually encrypted keys for accessing the piece of content on each other device (130) associated with the account, wherein when each of the other devices associated with the account synchronizes with the first device, the piece of content and the individually encrypted key for accessing the piece of content on the synchronized device are distributed to the synchronizing device;
extracting the first individually encrypted key from the data storage structure; and
storing the received piece of content and the received individually encrypted keys on the first device in the same format that the first individually encrypted key is stored in the data storage structure.

12. The method of claim 11, wherein the first device is a computer and at least one of the other devices is a media player.

13. The method of claim 11, wherein the additional individually encrypted keys are distributed to the other devices for storage on the other devices in the same format that the additional individually encrypted keys are stored in the data storage structure.

14. The method of claim 11, wherein the data storage structure is encrypted.

15. The method of claim 11 further comprising:
before distributing the piece of content and one of the additional individually encrypted keys to a particular one of the other devices, specifying the particular one of the other devices as a device that needs to receive the piece of content and the additional individually encrypted key.

16. The method of claim 11 further comprising synchronizing with a second device by distributing one of the additional individually encrypted keys to the second device in the same encrypted format that the second individually encrypted key is received in the data storage structure.

17. The method of claim 16, wherein the data storage structure is a first data storage structure, wherein synchronizing with the second device comprises distributing the additional individually encrypted key in a second data storage structure with the same format as the first data storage structure.

18. The method of claim 11, wherein the method further comprises extracting one of the additional individually encrypted keys from the data storage structure prior to distributing the additional individually encrypted key to one of the other devices with which the first device is synchronized.

19. The method of claim 11, wherein the first device and other devices are associated with the a through the account for receiving content.

20. The method of claim 11, wherein the data storage structure is a transport keybag.

21. The method of claim 20, wherein the transport keybag is not encrypted.

22. The method of claim 20, wherein the transport keybag is encrypted.

23. A digital rights management (DRM) system for distributing content, the system comprising:
a plurality of devices associated with an account; and
a set of DRM computers (110) for receiving, from a first device (115) in the plurality of devices, a request to access a piece of content on the plurality of devices, generating a plurality of individually encrypted keys for said plurality of devices, storing the keys in a data storage structure (205), and sending the piece of content in a protected format and the data storage structure to the first device, wherein each particular key allows a particular device to access the piece of content on the particular device,
wherein the first device is configured to receive the data storage structure, to extract a first individually encrypted key from the data storage structure, to store the received piece of content and the received individually encrypted keys on a storage of the first device in the same format that the first individually encrypted key is stored in the data storage structure, and to distribute the piece of content and the plurality of individually encrypted keys to the other devices in the plurality of devices when each of the other devices synchronizes with the first device.

24. The DRM system of claim 23, wherein the first device is a computer and at least one of the other devices is a media player.

25. The DRM system of claim 23, wherein the plurality of devices are associated with a user through the account for receiving content.

26. The DRM system of claim 23, wherein the data storage structure is a transport keybag.

27. The DRM system of claim 26, wherein the transport keybag is not encrypted.

28. The DRM system of claim 26, wherein the transport keybag is encrypted.

29. The DRM system of claim 23, wherein the individually encrypted key for a particular one of the plurality of devices is distributed to the particular device for storage on the particular device in the same format that the individually encrypted key is stored in the data storage structure.

30. The DRM system of claim 23, wherein the data storage structure is a first data storage structure, wherein synchronizing with one of the other devices comprises distributing one of the additional individually encrypted keys in a second data storage structure with the same format as the first data storage structure.

## Patentansprüche

1. Lesbares Speichermedium, welches ein Programm zur Ausführung speichert, wobei das Programm einen Satz von Anweisungen umfasst zum:
bei einer ersten Vorrichtung (115), welche mit einem Konto assoziiert ist,
Anfordern eines Stückes von Inhalt;
Annehmen (i) des Stückes von Inhalt in einem geschützten Format und (ii) eine Datenspeicherstruktur speichernd einen ersten individuell verschlüsselten Schlüssel zum Zugreifen auf das Stück von Inhalt auf der ersten Vorrichtung und zusätzlich individuell verschlüsselte Schlüssel zum Zugreifen auf das Stück von Inhalt auf jeder anderen Vorrichtung (130), assoziiert mit dem Konto, wobei, wenn jede der anderen Vorrichtungen assoziiert mit dem Konto mit der ersten Vorrichtung synchronisiert, das Stück von Inhalt und der individuell verschlüsselte Schlüssel zum Zugreifen auf das Stück von Inhalt auf der synchronisierenden Vorrichtung auf der synchronisierenden Vorrichtung verteilt sind;
Extrahieren des ersten individuell verschlüsselten Schlüssels von der Datenspeicherstruktur; und
Speichern des angenommenen Stückes von Inhalt und des angenommenen individuell verschlüsselten Schlüssels auf einem Speicher der ersten Vorrichtung in demselben Format, in welchem der erste individuell verschlüsselte Schlüssel in der Datenspeicherstruktur gespeichert ist.

2. Lesbares Speichermedium nach Anspruch 1, wobei das Programm weiter einen Satz von Anweisungen zum Extrahieren der zusätzlich individuell verschlüsselten Schlüssel von der Datenspeicherstruktur umfasst.

3. Lesbares Speichermedium nach Anspruch 1, wobei das Programm weiter einen Satz von Anweisungen zum Synchronisieren mit einer zweiten Vorrichtung umfasst, indem einer der zusätzlich individuell verschlüsselten Schlüssel an die zweite Vorrichtung verteilt wird.

4. Lesbares Speichermedium nach Anspruch 1, wobei die erste Vorrichtung ein Computer ist und zumindest eine der anderen Vorrichtungen ein Medienspieler ist.

5. Lesbares Speichermedium nach Anspruch 1, wobei die erste Vorrichtung und die anderen Vorrichtungen durch das Konto zum Annehmen von Inhalt mit einem Benutzer assoziiert sind.

6. Lesbares Speichermedium nach Anspruch 1, wobei die Datenspeicherstruktur ein Transportschlüsselband ist.

7. Lesbares Speichermedium nach Anspruch 6, wobei das Transportschlüsselband nicht verschlüsselt ist.

8. Lesbares Speichermedium nach Anspruch 6, wobei das Transportschlüsselband verschlüsselt ist.

9. Lesbares Speichermedium nach Anspruch 3, wobei der zweite individuell verschlüsselte Schlüssel an die zweite Vorrichtung verteilt ist zum Speichern auf der zweiten Vorrichtung in demselben Format, in welchem der zweite individuell verschlüsselte Schlüssel in der Datenspeicherstruktur gespeichert ist.

10. Lesbares Speichermedium nach Anspruch 3, wobei die Datenspeicherstruktur eine erste Datenspeicherstruktur ist, wobei Synchronisieren mit der zweiten Vorrichtung das Verteilen des einen der zusätzlichen individuell verschlüsselten Schlüssel in einer zweiten Datenspeicherstruktur mit demselben Format wie die erste Datenspeicherstruktur umfasst.

11. Verfahren umfassend:
bei einer ersten Vorrichtung (115), welche mit einem Konto assoziiert ist, Anfordern eines Stückes von Inhalt; Annehmen (i) des Stückes von Inhalt in einem geschützten Format und (ii) eine Datenspeicherstruktur speichernd einen ersten individuell verschlüsselten Schlüssel zum Zugreifen auf das Stück von Inhalt auf der ersten Vorrichtung und zusätzlich individuell verschlüsselte Schlüssel zum Zugreifen auf das Stück von Inhalt auf jeder anderen Vorrichtung (130), assoziiert mit dem Konto, wobei, wenn jede der anderen Vorrichtungen assoziiert mit dem Konto mit der ersten Vorrichtung synchronisiert, das Stück von Inhalt und der individuell verschlüsselte Schlüssel zum Zugreifen auf das Stück von Inhalt auf der synchronisierenden Vorrichtung auf der synchronisierenden Vorrichtung verteilt sind;
Extrahieren des ersten individuell verschlüsselten Schlüssels von der Datenspeicherstruktur; und
Speichern des angenommenen Stückes von Inhalt und des angenommenen individuell verschlüsselten Schlüssels auf der ersten Vorrichtung in demselben Format, in welchem der erste individuell verschlüsselte Schlüssel in der Datenspeicherstruktur gespeichert ist.

12. Verfahren nach Anspruch 11, wobei die erste Vorrichtung ein Computer und zumindest eine der anderen Vorrichtungen ein Medienspieler ist.

13. Verfahren nach Anspruch 11, wobei zusätzlichen individuell verschlüsselte Schlüssel an die anderen Vorrichtungen verteilt werden zum Speichern auf den anderen Vorrichtung in demselben Format, in welchem die zusätzlichen individuell verschlüsselten Schlüssel in der Datenspeicherstruktur gespeichert sind.

14. Verfahren nach Anspruch 11, wobei die Datenspeicherstruktur verschlüsselt ist.

15. Verfahren nach Anspruch 11, weiter umfassend:
vor dem Verteilen des Stückes von Inhalt und eines der zusätzlichen individuell verschlüsselten Schlüssel an eine bestimmte der anderen Vorrichtungen Spezifizieren des einen bestimmten der anderen Vorrichtungen als eine Vorrichtung, welche das Stück von Inhalt und den zusätzlichen individuell verschlüsselten Schlüssel zu empfangen braucht.

16. Verfahren nach Anspruch 11, weiter umfassend Synchronisieren mit einer zweiten Vorrichtung durch Verteilen eines der zusätzlichen individuell verschlüsselten Schlüssel an die zweite Vorrichtung in demselben verschlüsselten Format, in welchem der zweite individuell verschlüsselte Schlüssel in der Datenspeicherstruktur empfangen wurde.

17. Verfahren nach Anspruch 16, wobei die Datenspeicherstruktur eine erste Datenspeicherstruktur ist, wobei das Synchronisieren mit der zweiten Vorrichtung das Verteilen des zusätzlichen individuell verschlüsselten Schlüssels an eine zweite Datenspeicherstruktur mit demselben Format wie die erste Datenspeicherstruktur umfasst.

18. Verfahren nach Anspruch 11, wobei das Verfahren weiter umfasst Extrahieren eines der zusätzlichen individuell verschlüsselten Schlüssel von der Datenspeicherstruktur, bevor der zusätzliche individuell verschlüsselte Schlüssel an eine der anderen Vorrichtungen, mit welcher die erste Vorrichtung synchronisiert ist, verteilt wird.

19. Verfahren nach Anspruch 11, wobei die erste Vorrichtung und die anderen Vorrichtungen durch das Konto zum Empfangen von Inhalt mit dem einem [*sic*! dem Benutzer] assoziiert sind.

20. Verfahren nach Anspruch 11, wobei die Datenspeicherstruktur ein Transportschlüsselband ist.

21. Verfahren nach Anspruch 20, wobei das Transportschlüsselband nicht verschlüsselt ist.

22. Verfahren nach Anspruch 20, wobei das Transportschlüsselband verschlüsselt ist.

23. Digitales Rechteverwaltungs-(Digital Rights Management, DRM)-System zum Verteilen von Inhalt, wobei das System umfasst:
eine Vielzahl von Vorrichtungen, die mit einem Konto assoziiert sind; und
eine Menge von DRM-Computern (110) zum Empfangen, von einer ersten Vorrichtung (115) in der Vielzahl von Vorrichtungen, einer Anfrage, um auf ein Stück von Inhalt auf der Vielzahl von Vorrichtungen zuzugreifen, Erzeugen einer Vielzahl von individuell verschlüsselten Schlüsseln für die Vielzahl von Vorrichtungen, Speichern der Schlüssel in einer Datenspeicherstruktur (205), und Senden des Stückes von Inhalt in einem geschützten Format und die Datenspeicherstruktur zu der ersten Vorrichtung, wobei jeder bestimmte Schlüssel es einer bestimmten Vorrichtung erlaubt, auf das Stück von Inhalt auf der bestimmten Vorrichtung zuzugreifen,
wobei die erste Vorrichtung eingerichtet ist zum Empfangen der Datenspeicherstruktur, zum Extrahieren eines ersten individuell verschlüsselten Schlüssels von der Datenspeicherstruktur, zum Speichern des empfangenen Stückes von Inhalt und des empfangenen individuell verschlüsselten Schlüssels auf einem Speicher der ersten Vorrichtung in demselben Format, in welchem der erste individuell verschlüsselte Schlüssel in der Datenspeicherstruktur gespeichert ist, und zum Verteilen des Stückes von Inhalt und der Vielzahl von individuell verschlüsselten Schlüssel an die anderen Vorrichtungen in der Vielzahl von Vorrichtungen, wenn jede der anderen Vorrichtungen mit der ersten Vorrichtung synchronisiert.

24. DRM-System nach Anspruch 23, wobei die erste Vorrichtung ein Computer und zumindest eine der anderen Vorrichtungen ein Medienspieler ist.

25. DRM-System nach Anspruch 23, wobei die Vielzahl von Vorrichtungen durch das Konto zum Empfangen von Inhalt mit einem [*sic*! dem] Benutzer assoziiert ist.

26. DRM-System nach Anspruch 23, wobei die Datenspeicherstruktur ein Transportschlüsselband ist.

27. DRM-System nach Anspruch 26, wobei das Transportschlüsselband nicht verschlüsselt ist.

28. DRM-System nach Anspruch 26, wobei das Transportschlüsselband verschlüsselt ist.

29. DRM-System nach Anspruch 23, wobei der individuell verschlüsselte Schlüssel für eine bestimmte der Vielzahl von Vorrichtungen verteilt ist an die bestimmte Vorrichtung zur Speicherung auf der bestimmten Vorrichtung in demselben Format, in welchem der individuell verschlüsselte Schlüssel in der Datenspeicherstruktur gespeichert ist.

30. DRM-System nach Anspruch 23, wobei die Datenspeicherstruktur eine erste Datenspeicherstruktur ist, wobei das Synchronisieren mit einer der anderen Vorrichtungen das Verteilen eines der zusätzlichen individuell verschlüsselten Schlüssel in eine zweite Datenspeicherstruktur mit demselben Format wie die erste Datenspeicherstruktur umfasst.

## Revendications

1. Support de stockage lisible stockant un programme à exécuter, le programme comprenant des ensembles d'instructions pour :
au niveau d'un premier dispositif (115) qui est associé à un compte, demander un contenu ;
recevoir (i) le contenu dans un format protégé et (ii) une structure de stockage de données stockant une première clé cryptée individuellement pour accéder au contenu sur le premier dispositif, et des clés cryptées individuellement supplémentaires pour accéder au contenu sur chaque autre dispositif (130) associé au compte, dans lequel, lorsque chacun des autres dispositifs associés au compte se synchronise avec le premier dispositif, le contenu et la clé cryptée individuellement pour accéder au contenu sur le dispositif synchroniseur sont distribués au dispositif synchroniseur ;
extraire la première clé cryptée individuellement de la structure de stockage de données ; et
stocker le contenu reçu et les clés cryptées individuellement reçues sur un stockage du premier dispositif dans le même format que celui dans lequel la première clé cryptée individuellement est stockée dans la structure de stockage de données.

2. Support de stockage lisible selon la revendication 1, dans lequel le programme comprend en outre un ensemble d'instructions pour extraire les clés cryptées individuellement supplémentaires de la structure de stockage de données.

3. Support de stockage lisible selon la revendication 1, dans lequel le programme comprend en outre un ensemble d'instructions pour la synchronisation avec un second dispositif en distribuant l'une des clés cryptées individuellement supplémentaires au second dispositif.

4. Support de stockage lisible selon la revendication 1, dans lequel le premier dispositif est un ordinateur et au moins un des autres dispositifs est un lecteur multimédia.

5. Support de stockage lisible selon la revendication 1, dans lequel le premier dispositif et les autres dispositifs sont associés à un utilisateur à travers le compte pour recevoir du contenu.

6. Support de stockage lisible selon la revendication 1, dans lequel la structure de stockage de données est un keybag de transport.

7. Support de stockage lisible selon la revendication 6, dans lequel le keybag de transport n'est pas crypté.

8. Support de stockage lisible selon la revendication 6, dans lequel le keybag de transport est crypté.

9. Support de stockage lisible selon la revendication 3, dans lequel la seconde clé cryptée individuellement est distribuée au second dispositif pour un stockage sur le second dispositif dans le même format que celui dans lequel la seconde clé cryptée individuellement est stockée dans la structure de stockage de données.

10. Support de stockage lisible selon la revendication 3, dans lequel la structure de stockage de données est une première structure de stockage de données, dans lequel la synchronisation avec le second dispositif comprend la distribution de l'une des clés cryptées individuellement supplémentaires dans une seconde structure de stockage de données ayant le même format que la première structure de stockage de données.

11. Procédé comprenant :
au niveau d'un premier dispositif (115) qui est associé à un compte, la demande d'un contenu ;
la réception (i) du contenu dans un format protégé et (ii) d'une structure de stockage de données stockant une première clé cryptée individuellement pour accéder au contenu sur le premier dispositif, et des clés cryptées individuellement supplémentaires pour accéder au contenu sur chaque autre dispositif (130) associé au compte, dans lequel, lorsque chacun des autres dispositifs associés au compte se synchronise avec le premier dispositif, le contenu et la clé cryptée individuellement pour accéder au contenu sur le dispositif synchronisé sont distribués au dispositif synchroniseur ;
l'extraction de la première clé cryptée individuellement de la structure de stockage de données ; et
le stockage du contenu reçu et des clés cryptées individuellement reçues sur le premier dispositif dans le même format que celui dans lequel la première clé cryptée individuellement est stockée dans la structure de stockage de données.

12. Procédé selon la revendication 11, dans lequel le premier dispositif est un ordinateur et au moins un des autres dispositifs est un lecteur multimédia.

13. Procédé selon la revendication 11, dans lequel les clés cryptées individuellement supplémentaires sont distribuées aux autres dispositifs pour un stockage sur les autres dispositifs dans le même format que celui dans lequel les clés cryptées individuellement supplémentaires sont stockées dans la structure de stockage de données.

14. Procédé selon la revendication 11, dans lequel la structure de stockage de données est cryptée.

15. Procédé selon la revendication 11 comprenant en outre :
avant de distribuer le contenu et l'une des clés cryptées individuellement supplémentaires à l'un particulier des autres dispositifs, la spécification du dispositif particulier parmi les autres dispositifs, en tant que dispositif qui doit recevoir le contenu et la clé cryptée individuellement supplémentaire.

16. Procédé selon la revendication 11 comprenant en outre la synchronisation avec un second dispositif en distribuant l'une des clés cryptées individuellement supplémentaires au second dispositif dans le même format crypté que celui dans lequel la seconde clé cryptée individuellement est reçue dans la structure de stockage de données.

17. Procédé selon la revendication 16, dans lequel la structure de stockage de données est une première structure de stockage de données, dans lequel la synchronisation avec le second dispositif comprend la distribution de la clé cryptée individuellement supplémentaire dans une seconde structure de stockage de données ayant le même format que la première structure de stockage de données.

18. Procédé selon la revendication 11, dans lequel le procédé comprend en outre l'extraction de l'une des clés cryptées individuellement supplémentaires de la structure de stockage de données avant de distribuer la clé cryptée individuellement supplémentaire à l'un des autres dispositifs avec lesquels le premier dispositif est synchronisé.

19. Procédé selon la revendication 11, dans lequel le premier dispositif et les autres dispositifs sont associés aux uns à travers le compte pour recevoir du contenu.

20. Procédé selon la revendication 11, dans lequel la structure de stockage de données est un keybag de transport.

21. Procédé selon la revendication 20, dans lequel le keybag de transport n'est pas crypté.

22. Procédé selon la revendication 20, dans lequel le keybag de transport est crypté.

23. Système de gestion des droits numériques (DRM) pour distribuer du contenu, le système comprenant :
une pluralité de dispositifs associés à un compte ; et
un ensemble d'ordinateurs DRM (110) pour recevoir, depuis un premier dispositif (115) dans la pluralité de dispositifs, une demande d'accès à un contenu sur la pluralité des dispositifs, générer une pluralité de clés cryptées individuellement pour ladite pluralité de dispositifs, stocker les clés dans une structure de stockage de données (205), et envoyer le contenu dans un format protégé et la structure de stockage de données au premier dispositif, dans lequel chaque clé particulière permet à un dispositif particulier d'accéder au contenu sur le dispositif particulier,
dans lequel le premier dispositif est conçu pour recevoir la structure de stockage de données, pour extraire une première clé cryptée individuellement de la structure de stockage de données, pour stocker le contenu reçu et les clés cryptées individuellement reçues sur un stockage du premier dispositif dans le même format que celui dans lequel la première clé cryptée individuellement est stockée dans la structure de stockage de données, et pour distribuer le contenu et la pluralité de clés cryptées individuellement aux autres dispositifs dans la pluralité de dispositifs lorsque chacun des autres dispositifs se synchronise avec le premier dispositif.

24. Système DRM selon la revendication 23, dans lequel le premier dispositif est un ordinateur et au moins un des autres dispositifs est un lecteur multimédia.

25. Système DRM selon la revendication 23, dans lequel la pluralité des dispositifs sont associés à un utilisateur à travers le compte pour recevoir du contenu.

26. Système DRM selon la revendication 23, dans lequel la structure de stockage de données est un keybag de transport.

27. Système DRM selon la revendication 26, dans lequel le keybag de transport n'est pas crypté.

28. Système DRM selon la revendication 26, dans lequel le keybag de transport est crypté.

29. Système DRM selon la revendication 23, dans lequel la clé cryptée individuellement d'un dispositif particulier parmi la pluralité de dispositifs est distribuée au dispositif particulier pour un stockage sur le dispositif particulier dans le même format que celui dans lequel la clé cryptée individuellement est stockée dans la structure de stockage de données.

30. Système DRM selon la revendication 23, dans lequel la structure de stockage de données est une première structure de stockage de données, dans lequel la synchronisation avec l'un des autres dispositifs comprend la distribution de l'une des clés cryptées individuellement supplémentaires dans une seconde structure de stockage de données ayant le même format que la première structure de stockage de données.
